# EUROPÄISCHE PATENTANMELDUNG

(11) **EP 1 293 328 A1**
(43) Veröffentlichungstag der Anmeldung: **19.03.2003**
(21) Anmeldenummer: 02020358.4
(22) Anmeldetag: 12.09.2002
(51) Int. Cl.: B29C 49/00

(54) **Spritzformteil, insbesondere Preform**

(30) Priorität: 17.09.2001 AT 14632001
(71) Anmelder: Rundpack AG, 9444 Diepoldsau (CH)
(72) Erfinder: Klausriegler, Heinz, 4550 Kremsmünster (AT)
(74) Vertreter: Secklehner, Günter, Dr.

(57) **Zusammenfassung**

Die Erfindung betrifft einen Vorformling (1), insbesondere Hohlkörper - Spritzformling mit einem Halsfortsatz (2) mit einem am Außenumfang (3) des Halsfortsatzes (2) angeordneten Verbindungsmittel (4), z.B. einem Außengewinde (5) und einem mit dem Halsfortsatz (2) einen Übergangsbereich (9) ausbildend angeformten, vom Halsring in Richtung einer Längsmittelachse (10) verjüngt verlaufenden, einen Innenraum (13) begrenzenden Hohlkörperteil. Eine innere Querschnittsfläche (7) des Halsfortsatzes (2) ist gering kleiner als eine von einer Außenfläche (16) im Übergangsbereich (9) umgrenzte Querschnittsfläche (22) und bildet in einem Abstand (20) von der Querschnittsfläche (22), in Richtung einer Länge (15), einen konisch verlaufenden Wandbereich (19) an einem Außenumfang einer Stützfläche (21) aus.

## Beschreibung

Die Erfindung betrifft einen Vorformling wie im Oberbegriff des Anspruches 1 beschrieben, sowie einen Stapel aus zumindest zwei Vorformlingen, gemäß dem Oberbegriff des Anspruches 15.

Vorformlinge, wie sie auch unter der Bezeichnung Preform bekannt sind, sind Hohlkörper-Spritzteile aus Kunststoff, die ein Halbfabrikat darstellen, die in einem Umform-Vorgang in einem Streckblas-Verfahren weiterverarbeitet werden. Diese Vorformlinge werden in einem automatisierten Spritzvorgang in hohen Stückzahlen und kurzen Taktzeiten hergestellt und nach dem Spritzvorgang in Wirrlage in Schüttgutbehältern gesammelt und aus diesen Schüttgutbehältern für das nachfolgende Streckblas-Verfahren einzeln entnommen und der Streckblas-Anlage für die weitere Umformung zugeführt, wobei ein hohes Lager- und Transportvolumen zu bewältigen ist.

Aufgabe der Erfindung ist es Vorformlinge zu schaffen, mit denen die Lagerung und der Transport vereinfacht wird und die eine für die Weiterverarbeitung geeignete Raumform aufweisen.

Diese Aufgabe der Erfindung wird durch die im Kennzeichenteil des Anspruches 1 wiedergegebenen Merkmale erreicht. Der überraschende Vorteil dabei ist, daß durch die merkmalsgemäße Ausbildung eine exakt fluchtende Abstützung der einzelnen Vorformlinge im gestapelten Zustand, ohne Auftreten von die Vereinzelung behindernden Klemmkräften erreicht wird, wodurch die Manipulation und Zuführvorrichtung für den Folgeprozeß vereinfacht wird.

Vorteilhaft sind dabei Ausbildungen wie in den Ansprüchen 2 bis 4 beschrieben, wodurch bereits am Halbfabrikat und vor der anschließenden Weiterverarbeitung in hoher Präzision Mittel vorgesehen sind, die ein Verbinden mit Zusatzeinrichtungen, wie z.B. Verschlußkappen, Mundstücke oder sonstige Adapterstücke für unterschiedliche Verwendungszwecke, ermöglichen.

Von Vorteil ist auch eine Ausbildung nach Anspruch 5, weil dadurch kontinuierliche Übergänge im Wandbereich erreicht werden, durch die das Ausformen des Vorformlings zu einen Endprodukt vereinfacht wird.

Gemäß der vorteilhaften Weiterbildung, wie im Anspruch 6 beschrieben, werden hohe Klemmkräfte bei der Stapelung derartiger Vorformlinge vermieden. Es ist aber auch eine Ausbildung nach Anspruch 7 vorteilhaft, weil dadurch den unterschiedlichen, von Form des Endproduktes abhängigen Streckverhältnissen in verschiedenen Wandbereichen Rechnung getragen wird.

Eine weitere vorteilhafte Ausbildung beschreibt Anspruch 8, weil dadurch eine einwandfreie Abstützung in einen Stapel der Vorformlinge erreicht wird.

Gemäß der Ausbildung, wie im Anspruch 9 beschrieben, werden hohe, einer Vereinzelung entgegenwirkende Klemmkräfte bei der Stapelung der Vorformlinge vermieden.

Möglich ist dabei eine Ausführung wie im Anspruch 10 beschrieben, weil damit eine hohe Seitenstabilität in einem Stapel erreicht wird.

Durch die Ausbildung, wie im Anspruch 11 beschrieben, wird eine, insbesondere für einen Massenteil, kostengünstige Herstellung erreicht.

Durch die Ausbildungen, wie in den Ansprüchen 12 bis 14 beschrieben, kann ein vielseitiger Bedarf abgedeckt werden.

Die Erfindung betrifft aber auch einen Stapel, wie im Oberbegriff des Anspruches 15 beschrieben.

Das Stapeln von, insbesondere mit konisch aufeinander zulaufenden Wänden versehenen Kunststoff- Spritzteilen, ist für die Minimierung des Lager- und Transportaufwandes bekannt, wobei es bei Halbfabrikaten, die einem weiteren Streckblas-Formvorgang zugeführt werden sollen bekannt ist, bei der Formgebung des Halbfabrikates die Stapelungsmöglichkeiten zu berücksichtigen.

Die Aufgabe der Erfindung wird aber auch durch entsprechende Gestaltung der Vorformlinge diese in exakter Positionierung zu stapeln und wieder zu vereinzeln gelöst.

Dies wird durch die kennzeichnenden Merkmale im Anspruch 15 erreicht, weil dadurch eine achsfluchtende Ausrichtung und hohe Seitenstabilität durch die voneinander beabstandeten Aufstands- und Stützflächen erreicht wird.

Schließlich sind aber auch Ausbildungen nach den Ansprüchen 16 bis 18 vorteilhaft, weil eine hohe Positioniergenauigkeit und damit einfache Zuführ- und Vereinzelungsmöglichkeiten vorliegen.

Zum besseren Verständnis der Erfindung wird diese anhand der in der nachfolgenden Figuren beschriebenen Ausführungsbeispiele näher erläutert.

Es zeigen:
- Fig. 1: einen erfindungsgemäßen Vorformling in geschnittener Darstellung;
- Fig. 2: einen aus den erfindungsgemäßen Vorformlingen gebildeten Stapel, in geschnittener Darstellung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

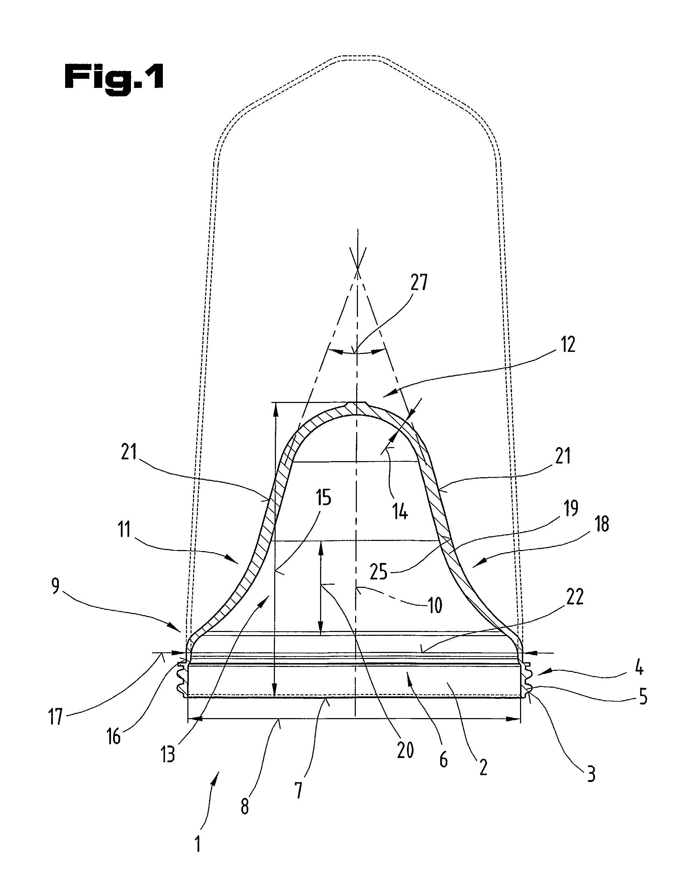

In der Fig. 1 ist ein erfindungsgemäßer Vorformling 1 beispielhaft rotationssymmetrische ausgebildet gezeigt. Dieser ist ein Kunststoffspritzteil und bildet ein Halbfabrikat, welches in einem Streckblas-Umformvorgang zu einem Fertigprodukt, z.B. in ein flaschenähnliches Aufnahmebehältnis, wie es schematisch in strichlierten Linien dargestellt ist, umgeformt wird.

Der Vorformling 1 weist einen ringförmigen Halsfortsatz 2 auf, der an einem Außenumfang 3 mit Verbindungsmittel 4, z.B. einem Außengewinde 5, versehen ist. Das Außengewinde 5 kann dabei aus einem oder mehreren Gewindegängen bestehen und dient beispielsweise der Befestigung eine Verschlußkappe, eines Mündungsadapters etc. am Fertigprodukt. Der Halsfortsatz 2 umgrenzt eine Öffnung 6 des Vorformlings 1 mit einer durch eine Kreisfläche gebildeten Querschnittsfläche 7, die durch einen Innendurchmesser 8 des Halsfortsatzes 2 festgelegt ist.

An den Halsfortsatz 2 schließt, einen Übergangsbereich 9 ausbildend, ein in Richtung einer Längsmittelachse 10 konisch verjüngt verlaufender, rotationssymmetrischer Hohlkörpermantelteil 11 an, der mit einer in einem von der Öffnung 6 distanzierten Endbereich angeordneten, in Form einer Hohl-Kugelkalotte ausgebildeten Endkappe 12 einen Innenraum 13 umschließt. Eine Wanddicke 14 des Hohlkörpermantelteils 11 und der Endkappe 12 ist, entsprechend der erforderlichen Materialverteilung, die durch das zu fertigende Endprodukt vorgegeben ist, abgestimmt, wodurch die Wanddicke 14 in Richtung einer Länge 15 des Vorformlings 1 unterschiedlich sein kann, jedoch kontinuierliche Übergänge vorgesehen sind.

Der Übergangsbereich 9 des Hohlkörpermantelteils 11 bildet, im unmittelbaren Anschlußbereich an den Halsfortsatz 2, eine zylindrische Außenfläche 16 aus, die von einem Außendurchmesser 17 bestimmt ist. Im Anschluß daran verläuft der Übergangsbereich 9, in bezug auf die Längsmittelachse 10, konvex gekrümmt, d.h. daß ein Mittelpunkt eines Krümmungsradius innerhalb des Hohlkörpermantelteils 11 liegt. Ein daran anschließender, weiterer Übergangsbereich 18 verläuft konkav gekrümmt, also mit einem Krümmungsradius dessen Mittelpunkt außerhalb des Hohlkörpermantelteils 11 liegt und geht über in einen Wandbereich 19, der als Hohl-Kegelstumpfmantelteil ausgebildet ist. An den Wandbereich 19 schließt einstükkig, und den Endbereich des Vorformlings 1 ausbildend, die als Hohl-Kugelkalotte ausgebildete Endkappe 12 an. Der Wandbereich 19 bildet mit einer äußeren Umfangsfläche in einem durch den Übergangsbereich 9 und den Übergangsbereich 18 gebildeten Abstand 20 vom Halsfortsatz 2 eine in Richtung der Länge 15 konisch verlaufende Stützfläche 21 aus.

Dargestellt und beschrieben ist vorhergehend eine rotationssymmetrische Ausbildung des Vorformlings 1. Selbstverständlich sind erfindungsgemäß auch weitere Querschnittsausbildungen z. B. ovale, mehreckige etc., entsprechend der beabsichtigten Form des Endproduktes möglich. Daher sind auch andere Verbindungsmittel 4, z.B. Schnappverbindungen etc., am Halsfortsatz 2 möglich.

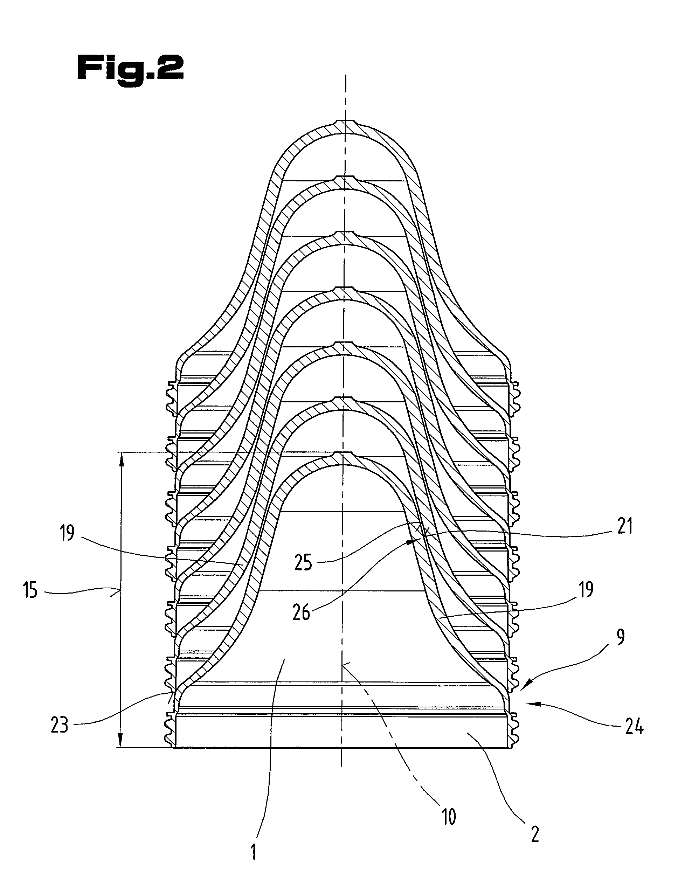

In der Fig. 2 ist nunmehr ein Stapel der Vorformlinge 1 gezeigt, bei dem die Vorformlinge 1 in Richtung ihrer Länge 15 und konzentrisch zur Längsmittelachse 10 überlappend gestapelt sind. Es wird im weiteren auf eine Zusammenschau der Fig. 1 und 2 verwiesen. Eine stabile Stapelung wird erfindungsgemäß durch die Querschnittsabmessungen des Halsfortsatzes 2, des Übergangsbereiches 9 und des die Stützfläche 21 ausbildenden Mantelteils 19 erreicht. Zu berücksichtigen ist bei einem derartigen Stapel neben der stabilen Halterung eine einfache Vereinzelung, wie sie für die Zufuhr der Vorformlinge 1 in eine Streckblas-Umformanlage zur Vereinfachung der erforderlichen Vorrichtungen anzustreben ist.

Um den Forderungen nach einem stabilen Stapel zu entsprechen, bei dem der Kraftaufwand zur Vereinzelung gering gehalten wird, sieht die erfindungsgemäße Ausbildung des Vorformlings 1 vor, den Außendurchmesser 17 der zylindrisch verlaufenden Außenfläche 16 im Übergangsbereiches 9 geringfügig größer auszubilden, als den Innendurchmesser 8 des Halsfortsatzes 2, d.h., daß die Querschnittsfläche 7 der Öffnung 6 geringfügig kleiner ist, als eine durch den Außendurchmesser 17 vorgegebene äußere Querschnittsfläche 22 des Übergangsbereiches 9. Damit wird bei einem Stapeln der Vorformlinge 1 eine Innenstirnkante 23 im gerundeten Verlauf des Übergangsbereiches 9 zur Anlage kommen, ohne daß ein weiteres, und die Klemmkräfte erhöhendes, Überlappen erfolgt und eine das Überlappen der Vorformlinge 1 begrenzende Stützanordnung 24 erreicht.

Zur Erzielung des stabilen Stapels trägt nunmehr weiters die von der Innenstirnkante 23 in Richtung der Länge 15 distanzierte Stützfläche 21 bei, die eine fluchtende Zentrierung der Längsmittelachsen 10 der gestapelten Vorformlinge 1 bewirkt, da diese konzentrisch von einer der Stützfläche 21 zugewandten Innenfläche 25 des gestapelten Vorformlings 1 umfaßt wird und damit eine Zentrieranordnung 26 ausbildet.

Diese Ausbildung ermöglicht die Bildung sehr stabiler Stapel einer großen Stückzahl der Vorformlinge 1, sowie eine exakte Positionierung durch die auch die Entnahme der Vorformlinge 1 aus dem Stapel vereinfacht wird.

Weiters sei erwähnt, daß ein Zentrumswinkel 27 der Stützfläche 21 so groß gewählt wird, daß unter Berücksichtigung des materialbedingten Reibungskoeffizienten eine Selbsthemmung der ineinander gestapelten Vorformlinge 1 vermieden wird, wodurch eine weitere Maßnahme zur Verhinderung der einer Vereinzelung entgegen wirkenden Klemmkraft gesetzt wird.

Der Ordnung halber sei abschließend darauf hingewiesen, daß zum besseren Verständnis des Aufbaus des Vorformlings dieser bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1; 2 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Vorformling
- 2: Halsfortsatz
- 3: Außenumfang
- 4: Verbindungsmittel
- 5: Außengewinde

- 6: Öffnung
- 7: Querschnittsfläche
- 8: Innendruckmesser
- 9: Übergangsbereich
- 10: Längsmittelachse

- 11: Hohlkörpermanteltei
- 12: Endkappe
- 13: Innenraum
- 14: Wanddicke
- 15: Länge

- 16: Außenfläche
- 17: Außendurchmesser
- 18: Übergangsbereich
- 19: Wandbereich
- 20: Abstand

- 21: Stützfläche
- 22: Querschnittsfläche
- 23: Innenstirnkante
- 24: Stützanordnung
- 25: Innenfläche

- 26: Zentrieranordnung
- 27: Zentrumswinkel

## Patentansprüche

1. Vorformling, insbesondere Hohlkörper - Spritzformling mit einem Halsfortsatz mit einem am Außenumfang des Halsfortsatzes angeordneten Verbindungsmittel, z.B. einem Außengewinde und einem mit dem Halsfortsatz einen Übergangsbereich ausbildend angeformten, vom Halsfortsatz in Richtung einer Längsmittelachse verjüngt verlaufenden, einen Innenraum begrenzenden Hohlkörperteil, **dadurch gekennzeichnet, daß** eine innere Querschnittsfläche (7) des Halsfortsatzes (2) gering kleiner ist als eine von einer Außenfläche (16) im Übergangsbereich (9) umgrenzte Querschnittsfläche (22) und in einem Abstand (20) von der Querschnittsfläche (22) in Richtung einer Länge (15) ein konisch verlaufender Wandbereich (19) an einem Außenumfang eine Stützfläche (21) ausbildet.

2. Vorformling nach Anspruch 1, **dadurch gekennzeichnet, daß** an einem Außenumfang (3) des Halsfortsatzes (2) Verbindungsmittel (4) angeordnet sind.

3. Vorformling nach Anspruch 1 oder 2, **dadurch gekennzeichnet, daß** die Verbindungsmittel (4) durch ein Außengewinde (5) gebildet sind.

4. Vorformling nach einem oder mehreren der vorhergehenden Ansprüche, **dadurch gekennzeichnet, daß** Verbindungsmittel (4) durch eine Schnappverbindung ausgebildet ist.

5. Vorformling nach einem oder mehreren der vorhergehenden Ansprüche, **dadurch gekennzeichnet, daß** der Halsfortsatz (2) mit dem Wandbereich (19) durch gegengleich gekrümmte Übergangsbereiche (9, 18) verbunden ist.

6. Vorformling nach einem oder mehreren der vorhergehenden Ansprüche, **dadurch gekennzeichnet, daß** ein Außendurchmesser (17) der Außenfläche (16) gleich oder größer einem Innendurchmesser (8) des Halsfortsatzes (2) ist.

7. Vorformling nach einem oder mehreren der vorhergehenden Ansprüche, **dadurch gekennzeichnet, daß** eine Wanddicke (14) des Hohlkörpermantelteils (11) in den Übergangsbereichen (9, 18) und dem Wandbereich (19) unterschiedlich ist.

8. Vorformling nach einem oder mehreren der vorhergehenden Ansprüche, **dadurch gekennzeichnet, daß** die Wanddicke (14) über den Bereich der Stützfläche (21) gleich ist.

9. Vorformling nach einem oder mehreren der vorhergehenden Ansprüche, **dadurch gekennzeichnet, daß** ein Zentrumswinkel (27) der Stützfläche (21) zwischen 2° und 20°, bevorzugt 10°, beträgt.

10. Vorformling nach einem oder mehreren der vorhergehenden Ansprüche, **dadurch gekennzeichnet, daß** der mittlere Abstand (20) der Stützfläche (21) von der Querschnittsfläche (22) etwa 50% einer Länge des Vorformlings (1) beträgt.

11. Vorformling nach einem oder mehreren der vorhergehenden Ansprüche, **dadurch gekennzeichnet, daß** der Vorformling (1) ein Kunststoff-Spritzteil ist und bevorzugt aus Polyethylentherephtalat (PET), Polypropylen (PP) oder Polycarbonat (PC) besteht.

12. Vorformling nach einem oder mehreren der vorhergehenden Ansprüche, **dadurch gekennzeichnet, daß** der Vorformling (1) ein sogenannter Weithals-Vorformling ist.

13. Vorformling nach einem oder mehreren der vorhergehenden Ansprüche, **dadurch gekennzeichnet, daß** der Vorformling (1) rotationssymmetrisch ausgebildet ist.

14. Vorformling nach einem oder mehreren der vorhergehenden Ansprüche, **dadurch gekennzeichnet, daß** der Vorformling (1) mehreckig ausgebildet ist.

15. Stapel aus zumindest zwei, einander teilweise überlappenden Vorformlingen nach einem oder mehreren der Ansprüche 1 bis 14, **dadurch gekennzeichnet, daß** die Vorformlinge (1) eine die Überlappung begrenzende Stützanordnung (24) und im Abstand (20), in Richtung der Länge (15), dazu eine Zentrieranordnung (26) zur achsfluchtender Lagepositionierung ausbilden.

16. Stapel nach Anspruch 15, **dadurch gekennzeichnet, daß** sich die Vorformlinge (1) über einen Großteil ihrer Länge (15) überlappen.

17. Stapel nach Anspruch 15 oder 16, **dadurch gekennzeichnet, daß** zumindest ein Vorformling (1) auf einem weiteren Vorformling (1) auf den an den Halsfortsatz (2), in Richtung der Länge (15), anschließenden Übergangsbereich (9) abgestützt ist.

18. Stapel nach einem oder mehreren der Ansprüche 15 bis 17, **dadurch gekennzeichnet, daß** die einander überlappenden Vorformlinge (1) durch eine Stützfläche (21) und einer dieser zugewandten Innenfläche (25) in fluchtender Anordnung der Längsmittelachsen (10) gehaltert sind.
